# EUROPEAN PATENT APPLICATION

(11) **EP 3 839 276 A1**
(43) Date of publication of application: **23.06.2021**
(21) Application number: 20202787.6
(22) Date of filing: 20.10.2020
(51) Int. Cl.: F16B 35/04

(54) **FASTENERS FOR WHEEL AND BRAKE ASSEMBLIES**

(30) Priority: 16.12.2019 US 201916715149
(71) Applicant: Goodrich Corporation, Charlotte, NC 28217-4578 (US)
(72) Inventor: FRENCH, Robert, Beavercreek, OH 45434 (US); HERRMANN, Nathaniel John, Springfield, OH 45502 (US)
(74) Representative: Dehns

(57) **Abstract**

A tie bolt (150;250;350;352;354) is disclosed. In various embodiments, the tie bolt includes a shank (370) having a first end and a second end; and a counterbore (351) disposed at the second end of the shank, opposite the first end, the counterbore having a counterbore depth (364) and a counterbore diameter (360).

## Description

### FIELD

The present disclosure relates to aircraft wheel and brake assemblies and, more particularly, to tie bolts used with aircraft brake and wheel assemblies.

### BACKGROUND

Conventional aircraft wheel assemblies may be of the split wheel type, in which two wheel sections are secured together to form the wheel. Frequently, the two wheel sections are secured to each other using a number of circumferentially spaced tie bolt assemblies having a bolt head at one end and a nut at the opposing end or base. In similar fashion, aircraft brake assemblies use tie bolts to secure a piston housing to a torque plate. Aircraft wheel and brake assemblies tend to be heavy, and thereby benefit from weight-saving measures. The nuts, bolts, rivets and the like employed for securing the structural elements of an airplane contribute a substantial portion to the total weight of the airplane since a very large number of fasteners are used. Thus, there has been a long effort to reduce the weight of fasteners without substantially decreasing strength or preferably decreasing weight while increasing strength. Even an apparently small decrease in weight on an individual fastener can have a large impact on the total weight of an airplane.

### SUMMARY

A tie bolt is disclosed. In various embodiments, the tie bolt includes a shank having a first end and a second end; and a counterbore disposed at the second end of the shank, opposite the first end, the counterbore having a counterbore depth and a counterbore diameter.

In various embodiments, the counterbore includes a counterbore portion that is substantially cylindrical along the counterbore depth. In various embodiments, the counterbore includes a counterbore end portion extending from the counterbore portion toward the first end of the shank. In various embodiments, the counterbore end portion defines a conical shape. In various embodiments, the counterbore end portion defines a hemispherical shape.

In various embodiments, the shank defines a shank diameter and the counterbore diameter is equal to between eight-tenths and one-half of the shank diameter. In various embodiments, the shank diameter is between seven-tenths inch and eight tenths inch. In various embodiments, the counterbore depth is between zero inch and one-half inch. In various embodiments, the counterbore includes a counterbore portion that is substantially cylindrical along the counterbore depth. In various embodiments, the counterbore includes a counterbore end portion extending from the counterbore portion toward the first end of the shank. In various embodiments, the counterbore end portion defines at least one of a conical shape and a hemispherical shape.

A wheel assembly is disclosed. In various embodiments, the wheel assembly includes an inboard wheel section having a plurality of inboard bolt holes; an outboard wheel section having a plurality of outboard bolt holes and configured to mate with the inboard wheel section; and a tie bolt configured to extend through at least one of the plurality of inboard bolt holes and at least one of the plurality of outboard bolt holes, the tie bolt comprising a shank having a first end and a second end, and a counterbore disposed at the second end of the shank, opposite the first end, the counterbore having a counterbore depth and a counterbore diameter.

In various embodiments, the shank defines a shank diameter and the counterbore diameter is equal to between one-half and eight-tenths of the shank diameter. In various embodiments, the counterbore includes a counterbore portion that is substantially cylindrical along the counterbore depth. In various embodiments, the shank diameter is between seven-tenths inch and eight tenths inch. In various embodiments, the counterbore depth is between zero inch and one-half inch.

A brake mechanism for use with a wheel assembly is disclosed. In various embodiments, the brake mechanism includes a piston housing having a plurality of piston housing bolt holes; a torque plate barrel having a plurality of torque plate barrel bolt holes and configured to mate with the piston housing; and a tie bolt configured to extend through at least one of the plurality of piston housing bolt holes and at least one of the plurality of torque plate barrel bolt holes, the tie bolt comprising a shank having a first end and a second end, and a counterbore disposed at the second end of the shank, opposite the first end, the counterbore having a counterbore depth and a counterbore diameter.

In various embodiments, the shank defines a shank diameter and the counterbore diameter is equal to between one-half and eight-tenths of the shank diameter. In various embodiments, the shank diameter is between seven-tenths inch and eight tenths inch. In various embodiments, the counterbore depth is between zero inch and one-half inch.

The forgoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B provide a perspective schematic view and a cross sectional view of a portion of an aircraft wheel assembly, in accordance with various embodiments;
FIG. 2 provides a cross sectional schematic view of a portion of an aircraft wheel and brake assembly, in accordance with various embodiments;
FIGS 3A, 3B and 3C provide cross sectional schematic views of various tie bolts, in accordance with various embodiments; and
FIG. 4 provides a graph of root stress as a function of counterbore depth, in accordance with various embodiments;

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

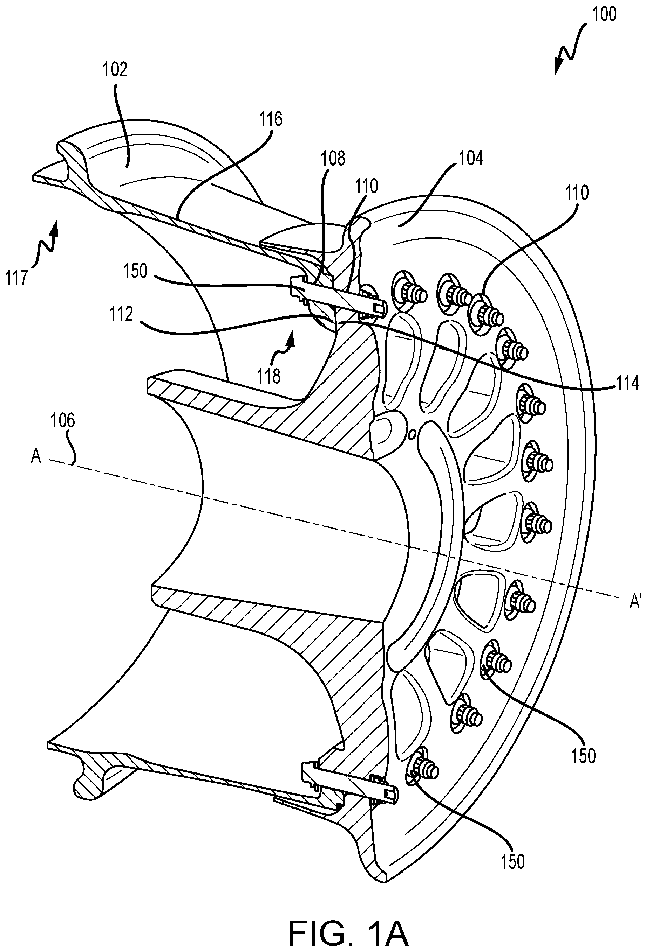

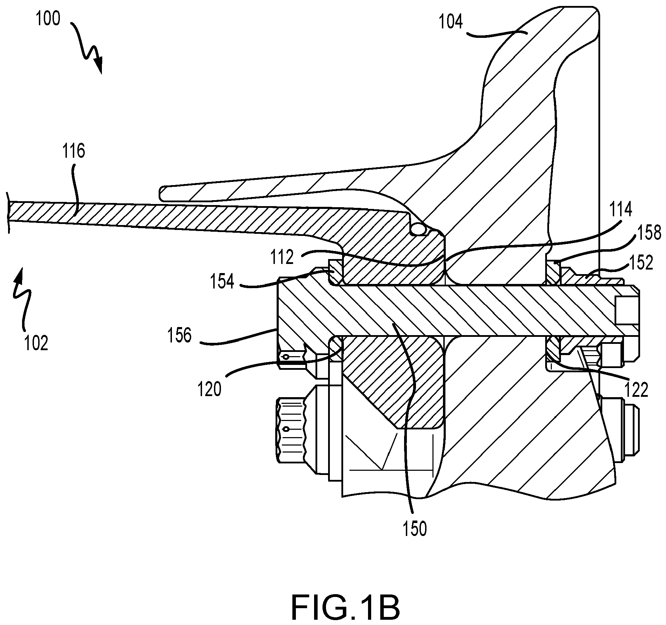

The present disclosure describes various embodiments of wheel assemblies and brake assemblies including tie bolt systems. Such tie bolt systems may include counterbore portions at the base of the tie bolts. Referring now to FIGS. 1A and 1B, a wheel assembly 100 is illustrated in accordance with various embodiments. The wheel assembly 100 comprises a split wheel assembly. For example, the wheel assembly 100 may comprise an inboard wheel section 102 (or a first wheel section) coupled to an outboard wheel section 104 (or a second wheel section). As illustrated, the inboard wheel section 102 and the outboard wheel section 104 are generally configured to rotate about a central axis 106. In various embodiments, the inboard wheel section 102 may comprise a plurality of inboard bolt holes 108 and the outboard wheel section 104 may comprise a plurality of outboard bolt holes 110. In various embodiments, the inboard wheel section 102 and the outboard wheel section 104 may be oriented such that the plurality of inboard bolt holes 108 and the plurality of outboard bolt holes 110 are radially aligned. In various embodiments, the inboard wheel section 102 and the outboard wheel section 104 are coupled together by a plurality of tie bolts 150, with each of the plurality of tie bolts 150 being disposed through respective ones of the plurality of inboard bolt holes 108 and the plurality of outboard bolt holes 110. Each of the plurality of tie bolts 150 is typically secured in position by a nut 152. A head washer 154 may be positioned between a head portion 156 of each tie bolt and an inboard flange 120 of the inboard wheel section 102. Similarly, a nut washer 158 may be positioned between the nut 152 and an outboard flange 122 of the outboard wheel section 104.

In various embodiments, the inboard wheel section 102 may comprise an inboard mating face 112 and the outboard wheel section 104 may comprise an outboard mating face 114. In various embodiments, the plurality of inboard bolt holes 108 is spaced circumferentially about the inboard mating face 112 and the plurality of outboard bolt holes 110 is spaced circumferentially about the outboard mating face 114. In response to the plurality of tie bolts 150 being properly tightened, the inboard mating face 112 and the outboard mating face 114 may contact each other in substantially parallel planes. In various embodiments, the inboard wheel section 102 may further comprise a tubewell portion 116, which may comprise a thin web extending at least partially between an inboard end 117 and an outboard end 118, and is subjected to large forces upon inflation of a tire disposed about the tubewell portion 116.

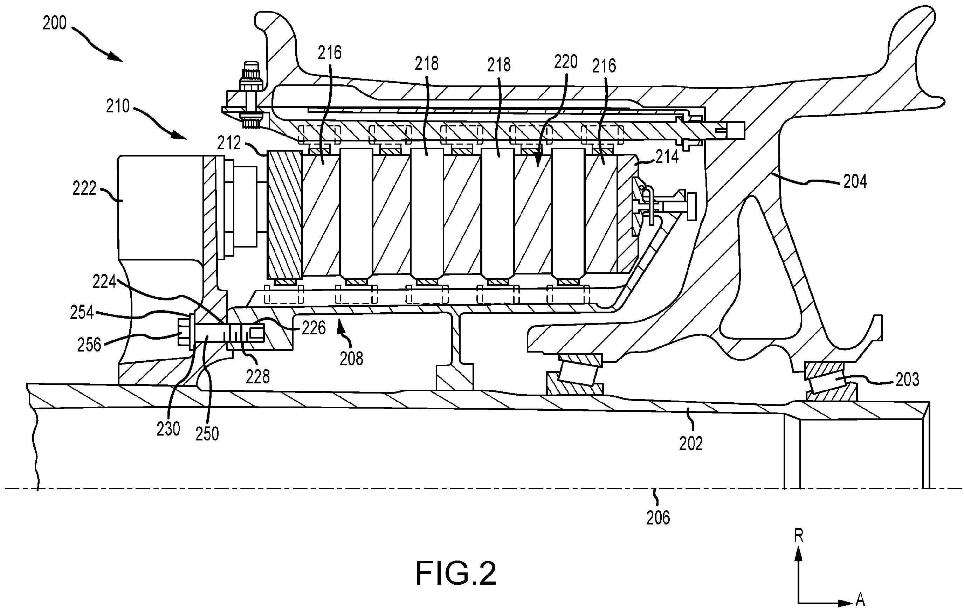

Referring now to FIG. 2, there is schematically depicted a brake mechanism 200 configured for use with a wheel assembly, such as, for example, the wheel assembly 100 described above with reference to FIGS. 1A and 1B. In various embodiments, the brake mechanism 200 is mounted on an axle 202 for use with a wheel 204 disposed on and configured to rotate about the axle 202 via one or more bearing assemblies 203. A central axis 206 (colinear with the central axis 106 described above) extends through the axle 202 and defines a center of rotation of the wheel 204. A torque plate barrel 208 (sometimes referred to as a torque tube or barrel or a torque plate) is aligned concentrically with the central axis 206, and the wheel 204 is rotatable relative to the torque plate barrel 208.

The brake mechanism 200 includes a piston assembly 210, a pressure plate 212 disposed adjacent the piston assembly 210, an end plate 214 positioned a distal location from the piston assembly 210, and a plurality of rotor disks 216 interleaved with a plurality of stator disks 218 positioned intermediate the pressure plate 212 and the end plate 214. The pressure plate 212, the plurality of rotor disks 216, the plurality of stator disks 218 and the end plate 214 together form a brake heat sink or brake stack 220. The pressure plate 212, the end plate 214 and the plurality of stator disks 218 are mounted to the torque plate barrel 208 and remain rotationally stationary relative to the axle 202. The plurality of rotor disks 216 is mounted to the wheel 204 and rotate with respect to each of the pressure plate 212, the end plate 214 and the plurality of stator disks 218.

An actuating mechanism for the brake mechanism 200 includes a plurality of piston assemblies, including the piston assembly 210, circumferentially spaced around a piston housing 222 (only one piston assembly is illustrated in FIG. 2). In various embodiments, the piston housing 222 and the torque plate barrel 208 are coupled together by a plurality of tie bolts 250, with each of the plurality of tie bolts 250 being disposed through respective ones of a plurality of piston housing bolt holes 224 and a plurality of torque plate barrel bolt holes 226. Each of the plurality of tie bolts 250 is typically secured in position by a threaded portion 228 within the torque plate barrel 208. A head washer 254 may be positioned between a head portion 256 of each tie bolt and an inboard flange 230 of the piston housing 222.

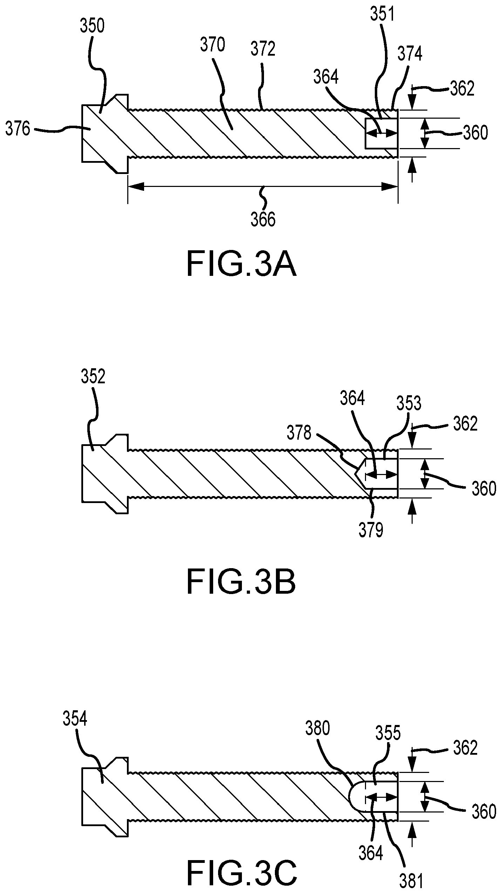

Referring now to FIG. 3A, a tie bolt 350 is illustrated, similar to one of the plurality of tie bolts 150 and the plurality of tie bolts 250 illustrated in FIGS. 1A and 1B and FIG. 2, respectively. In various embodiments, the tie bolt 350 includes a shank 370 that defines a shank diameter 362 and a shank length 366. Without loss of generality, the shank diameter 362 may be defined as the pitch diameter of the tie bolt 350, with the pitch diameter being defined as an average of the root diameter and the crest diameter of a bolt thread 372 that extends along at least a portion of the shank length 366. In various embodiments, the tie bolt 350 includes a counterbore 351 that extends a counterbore depth 364 into the shank 370 from a base 374 toward a head 376 of the tie bolt 350. The head 376 of the tie bolt 350 is disposed at a first end of the shank 370 and the counterbore 351 is disposed at a second end of the shank 370. In various embodiments, the counterbore 351 defines a cylindrical hole having a counterbore diameter 360 that extends from the base 374 and into the shank 370 along the counterbore depth 364.

In similar fashion, a tie bolt 352 is illustrated in FIG. 3B as having a counterbore 353 with a counterbore end portion 378 that defines a conical shape extending from a counterbore portion 379 that is generally cylindrical and that otherwise shares similar characteristics as does the counterbore 351 described above - *i.e.,* the counterbore portion 379 shares the counterbore diameter 360 and the counterbore depth 364 as does the counterbore 351 described above with reference to FIG. 3A. Similarly, a tie bolt 354 is illustrated in FIG. 3C as having a counterbore 355 with a counterbore end portion 380 that defines a hemispherical shape extending from a counterbore portion 381 that is generally cylindrical and that otherwise shares similar characteristics as does the counterbore 351 described above - *i.e.,* the counterbore portion 381 shares the counterbore diameter 360 and the counterbore depth 364 as does the counterbore 351 described above with reference to FIG. 3A.

Referring again to FIG. 3A, the counterbore 351 is sized, in accordance with various embodiments, such that the root stress of the main load bearing threads (*e.g*., the first three threads in engagement with a nut or some other internally threaded member, such as a torque plate barrel) does not exceed the loads or stresses (*e.g.,* the allowable shear or principal stresses) placed on the threads of the tie bolt 350 during operation. In various embodiments, for example, the counterbore diameter 360 (C_{DIA}), normalized by the shank diameter 362 (S_{DIA}), is equal to eight-tenths (0.80) or less; or, in various embodiments, C_{DIA}/S_{DIA} is equal to two-thirds (0.667) or less; or, in various embodiments, C_{DIA}/S_{DIA} is equal to one-half (0.50) or less. In various embodiments, the counterbore depth 364 may extend any length along the shank length 366, but at larger counterbore diameters (e.g., C_{DIA}/S_{DIA} equal to between one-half (0.50) and eight-tenths (0.80)), the counterbore depth 364 should generally not extend past the first three threads in engagement with a nut or some other internally threaded member; excepting, however, where the counterbore includes a counterbore end portion extending from a cylindrically shaped counterbore portion, such as, for example, the counterbore end portion 378 and the counterbore end portion 380 illustrated in FIGS. 3B and 3C, respectively. Note that while the tie bolts described in the disclosure generally include a head located at a first end of a shank opposite the base or the second end of the shank, the disclosure contemplates all-thread shanks, where counterbores are disposed at one or both of the first end and the second end and where the head is replaced, for example, with a nut threaded onto the first end of the shank.

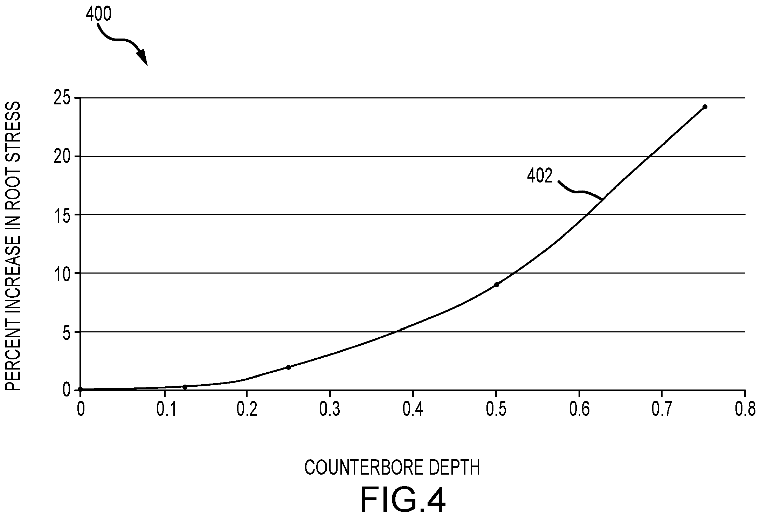

Referring now to FIG. 4, a graph 400 illustrates a simulated effect on maximum root stress that a counterbore produces as a function of counterbore depth. By way of example, the shank diameter of the tie bolt is three-quarter (0.75) inch (≈ 19.0 mm) and the counterbore diameter is one-half (0.50) inch (≈ 12.7 mm). These dimensions provide a value of C_{DIA}/S_{DIA} equal to two-thirds (0.667). Referring to FIG. 4, a counterbore depth equal to 0.125 inch (≈ 3.2 mm) produces a less than one percent (1%) increase in the maximum root stress over a threshold value of maximum root stress with no counterbore. Similarly, a counterbore depth equal to 0.25 inch (≈ 6.4 mm) produces an approximately two percent (2%) increase in the maximum root stress over the threshold value of maximum root stress with no counterbore. Deeper counterbores produce correspondingly higher percentage increases in maximum root stress, as illustrated.

At the lower depths (*e.g.,* at the 0.125 inch (≈ 3.2 mm) and the 0.25 inch (≈ 6.4 mm) depths), the weight savings per bolt are, respectively, approximately 0.00729 lbs (≈ 3.30 grams) and approximately 0.01458 lbs (≈ 6.60 grams). On a wheel and brake system for a large commercial aircraft having, for example, eight (8) braked positions, each having twenty (20) tie bolts for each wheel assembly (*e.g*., the wheel assembly 100 described above with reference to FIGS. 1A and 1B) and twelve (12) tie bolts for each brake mechanism (*e.g*., the brake mechanism 200 described above with reference to FIG. 2), with each tie bolt having a shank diameter equal to three-quarter (0.75) inch (≈ 19.0 mm) and a counterbore diameter equal to one-half (0.50) inch (≈ 12.7 mm), the total weight savings for the aircraft is, respectively, approximately 1.75 lbs (≈ 793.7 grams) and approximately 3.5 lbs (≈ 1587.5 grams).

While this example provides analysis of a tie bolt having a shank diameter equal to three-quarter (0.75) inch (≈ 19.0 mm) and a counterbore diameter equal to one-half (0.50) inch (≈ 12.7 mm), it is contemplated that similar beneficial effects of weight saving without substantial increase in maximum root stress will be observed in tie bolts having shank diameters in the range of several inches to fractions of an inch. For example, in various embodiments, the shank diameter is between two (2) inches (≈ 50.8 mm) and one-quarter (0.25) inch (≈ 6.35 mm); in various embodiments, the shank diameter is between one (1) inch (≈ 25.4 mm) and one-half (0.50) inch (≈ 12.7 mm); and in various embodiments, the shank diameter is between eight-tenths (0.80) inch (≈ 20.32 mm) and seven-tenths (0.70) inch (≈ 17.78 mm). Corresponding ranges for C_{DIA}/S_{DIA} is equal to eight-tenths (0.80) or less; or, in various embodiments, C_{DIA}/S_{DIA} is equal to two-thirds (0.667) or less; or, in various embodiments, C_{DIA}/S_{DIA} is equal to one-half (0.50) or less. The counterbore depth for all cases ranges from one-tenth (0.10) S_{DIA} to eight-tenths (0.80) S_{DIA}., though other depths are contemplated depending on the location of the shank of the first engaged thread. The result for all ranges is a significant weight savings with minimal increase in the maximum root stress.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A tie bolt (150;250;350;352;354;), comprising:
a shank (370) having a first end and a second end; and
a counterbore (351) disposed at the second end of the shank, opposite the first end, the counterbore having a counterbore depth (364) and a counterbore diameter (360).

2. The tie bolt of claim 1, wherein the counterbore includes a counterbore portion that is substantially cylindrical along the counterbore depth.

3. The tie bolt of claim 2, wherein the counterbore includes a counterbore end portion (378;380) extending from the counterbore portion toward the first end of the shank.

4. The tie bolt of claim 3, wherein the counterbore end portion defines a conical shape.

5. The tie bolt of claim 3, wherein the counterbore end portion defines a hemispherical shape.

6. The tie bolt of any preceding claim, wherein the shank defines a shank diameter (362) and the counterbore diameter is equal to between eight-tenths and one-half of the shank diameter.

7. The tie bolt of claim 6, wherein the shank diameter is between seven-tenths inch (17.78 mm) and eight tenths inch (20.32 mm).

8. The tie bolt of any preceding claim, wherein the counterbore depth is between zero inch (0 mm) and one-half inch (12.7 mm).

9. A wheel assembly (100), comprising:
an inboard wheel section (102) having a plurality of inboard bolt holes (108);
an outboard wheel section (104) having a plurality of outboard bolt holes (110) and configured to mate with the inboard wheel section; and
the tie bolt (150;250;350;352;354;) of any preceding claim, wherein the tie bolt is configured to extend through at least one of the plurality of inboard bolt holes and at least one of the plurality of outboard bolt holes.

10. A brake mechanism (200) for use with a wheel assembly (100), comprising:
a piston housing (222) having a plurality of piston housing bolt holes (224);
a torque plate barrel (208) having a plurality of torque plate barrel bolt holes (226) and configured to mate with the piston housing; and
the tie bolt (150;250;350;352;354;) of any of claims 1-8, the tie bolt configured to extend through at least one of the plurality of piston housing bolt holes and at least one of the plurality of torque plate barrel bolt holes.
